Europäisches Patentamt

European Patent Office

Office européen des brevets

(11) Veröffentlichungsnummer: **0 375 866 B1**

# (12) EUROPÄISCHE PATENTSCHRIFT

(45) Veröffentlichungstag der Patentschrift: **23.12.92**

(21) Anmeldenummer: **89119445.8**

(22) Anmeldetag: **20.10.89**

(51) Int. Cl.⁵: **A47J 43/046**

(54) **Elektrisch betriebenes Gerät für die Bearbeitung und Zubereitung von Nahrungsmitteln aller Art.**

(30) Priorität: **22.12.88 DE 3843139**

(43) Veröffentlichungstag der Anmeldung:
**04.07.90 Patentblatt 90/27**

(45) Bekanntmachung des Hinweises auf die
Patenterteilung:
**23.12.92 Patentblatt 92/52**

(84) Benannte Vertragsstaaten:
**AT BE CH FR LI NL**

(56) Entgegenhaltungen:
**EP-A- 0 156 506**
**DE-C- 3 408 692**
**DE-C- 3 448 174**

(73) Patentinhaber: **Robert Krups GmbH & Co. KG**
**Heresbachstrasse 29**
**W-5650 Solingen 19(DE)**

(72) Erfinder: **Maass, Rudolf**
**Sperlingsweg 45**
**W-5650 Solingen 1(DE)**
Erfinder: **Stange, Dieter**
**Obermeidericherstrasse 35**
**W-4200 Oberhausen 1(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein elektrisch betriebenes Gerät für die Bearbeitung und Zubereitung von Nahrungsmitteln aller Art, mit einem Gehäuse zur Unterbringung des Elektromotors und von zugehörigen Schalt- und Steuereinrichtungen, das auf einem Gerätefuß angeordnet ist, auf dem in Nebeneinanderanordnung ein Arbeitsbehälter aufstellbar ist und mit einer Arbeitswelle, deren oberes Ende in einen beidseitig offenen, hülsenartigen Vorsprung am Boden des Arbeitsbehälters hineinragt, und mit dem eine Isolierhülse fest verbunden ist, die der lösbaren Aufnahme eines Arbeitswerkzeuges dient, mit einem den Arbeitsbehälter verschließbaren Deckel, dem eine Sicherheitseinrichtung zugeordnet ist.

Derartige elektrisch betriebene Geräte für die Bearbeitung und Zubereitung von Nahrungsmitteln aller Art sind beispielsweise bekannt durch die DE-PS 34 08 692 oder durch die DE-PS 34 48 174. Solche elektrisch betriebene Geräte haben sich in der Praxis hervorragend bewährt, insbesondere dann, wenn sie, wie bei der Ausführungsform nach der DE-PS 34 08 692, die Verwendung eines Adapters vorsehen, der abnehmbar auf der Isolierhülse angeordnet ist. Der zwischen die Isolierhülse und das Arbeitswerkzeug geschaltete Adapter kann auf der Isolierhülse verbleiben, wenn man die Arbeitswerkzeuge gegeneinander austauschen will. Es ist bei dieser bekannten Ausführungsform somit nicht mehr erforderlich, bei jedem Arbeitswerkzeugwechsel den Adapter aus dem Arbeitsbehälter zu entfernen. Trotzdem ist es möglich, bedarfsweise, beispielsweise zum Reinigen des Gerätes, den Adapter von der Isolierhülse abzunehmen.

Die abgewandelte Ausführungsform des Gerätes nach der DE-PS 34 48 174 zeigt eine besonders einfache Ausbildung einer Sicherheitseinrichtung, weil diese nur aus wenigen leicht herzustellenden Teilen besteht, wobei einer der Teile dem Deckel unmittelbar angeformt ist.

Insoweit haben sich diese bekannten elektrisch betriebenen Geräte für die Bearbeitung und Zubereitung von Nahrungsmitteln aller Art bewährt. Auf der anderen Seite ist es bei Ihrem Einsatz unbedingt erforderlich, einen Arbeitsbehälter mit ganz bestimmten Abmessungen zu verwenden muß. Es ist daher bei diesen bekannten Ausführungsformen von elektrisch betriebenen Geräten für die Bearbeitung und Zubereitung von Nahrungsmitteln aller Art nicht möglich, einen in seinen Abmessungen und in seiner Gestalt abweichenden anderen Arbeitsbehälter einzusetzen. Insbesondere ist es nicht möglich, einen im Durchmesser größeren Arbeitsbehälter als den vorgesehenen mit dem bekannten Gerät zusammenarbeiten zu lassen. Eine solche Handhabung scheitert schon allein daran, weil das Gehäuse, in dem unter anderem der Elektromotor untergebracht ist, mit dem Gerätefuß eine untrennbare Baueinheit bildet.

Hier will die Erfindung Abhilfe schaffen. Sie will unter Beibehaltung der genannten Vorteile der bisher bekannten Ausführungsformen derartiger elektrisch betriebener Geräte für die Bearbeitung und Zubereitung von Nahrungsmitteln aller Art diese so umgestalten und so abändern, daß auch der Einsatz mindestens eines weiteren Arbeitsbehälters möglich ist. Dieser kann auch durchmessermäßig verändert werden. Dabeisoll jedoch die Grundkonzeption der bisherigen Geräte dieser Art weitgehend beibehalten bleiben.

Zur Lösung dieser Aufgabe wird erfindungsgemäß vorgeschlagen, dem elektrisch betriebenen Gerät mehrere unterschiedliche Durchmesser aufweisende Arbeitsbehälter zuzuordnen, wobei in Abhängigkeit von dem Durchmesser des benutzten Arbeitsbehälters die Lage des Gehäuses des Elektromotors auf dem Gerätefuß zu dem jeweiligen Arbeitsbehälter veränderbar ist. Im Gegensatz zu den bisher bekannten Ausführungsformen derartiger Geräte wird nunmehr das Gehäuse des Elektromotors nicht mehr mit dem Gerätefuß zu einer untrennbaren Baueinheit zusammengefaßt, sondern diese beiden Teile, nämlich das Gehäuse für den Elektromotor und der Gerätefuß, werden voneinander getrennt derart, daß sie unterschiedliche Lagen zueinander einnehmen können. Dabei soll sich aber in Bezug auf den eigentlichen Antrieb nichts ändern, das heißt, der Abstand zwischen der Motorwelle einerseits und der Arbeitswelle des Arbeitsbehälters soll ebenso unverändert beibehalten bleiben, wie die zwischen diesen Teilen liegenden Übertragungselemente. Nach wie vor ist es bei einer solchen Ausführungsform des elektrisch betriebenen Gerätes möglich, den bisher gebräuchlichen Arbeitsbehälter weiterzubenutzen also denjenigen, der mit einem abnehmbaren Deckel versehen ist, wobei diesem Deckel der eine Teil einer Sicherheitseinrichtung zugeordnet ist. Bei dieser Ausführungsform der Erfindung kann somit die Inbetriebnahme des Gerätes nur dann erfolgen, wenn der Deckel auf dem Arbeitsbehälter ruht und in eine solche Lage überführt wird, daß seine Teile der Sicherheitseinrichtung mit denen zusammenarbeiten, die im Gehäuse des Elektromotors vorgesehen sind.

Auf der anderen Seite ist es aber möglich, einen im Durchmesser größeren Arbeitsbehälter zu benutzen, beispielsweise eine nach oben offene Rührschüssel. In diesem Falle wird das Gehäuse des Elektromotors in eine andere Lage auf dem Gerätefuß überführt. Dies ist ohne weiteres möglich, da ja erfindungsgemäß nunmehr eine Trennung zwischen dem Gehäuse und dem Gerätefuß vorgenommen ist. Auf diese Weise läßt sich dem Gerät eine großvolumige Rührschüssel zuordnen. In diesem Falle braucht die Sicherheitsvorrichtung nicht in Funktion zu treten, weil das verwendete Arbeitswerkzeug, beispielsweise ein Kneter für Teige, mit einem Reduziergetriebe versehen ist. Auf diese Weise läuft das Arbeitswerkzeug mit geringer Drehzahl um.

Hinsichtlich der Lageveränderung des Gehäuses des Elektromotors zu dem Gerätefuß ergeben sich mehrere Möglichkeiten. Nach einem ersten Vorschlag der Erfindung kann das Gehäuse des Elektromotors vom Gerätefuß abgenommen und mit diesem in einer anderen Lage lösbar wieder verbunden werden. Auf diese Weise ist eine Anpassung an unterschiedlichen Durchmesser aufweisende Arbeitsbehälter möglich.

Bei dieser Ausführungsform der Erfindung empfiehlt es sich, das Gehäuse des Elektromotors an seiner dem Gerätefuß zugekehrten Stirnfläche zapfenartige Vorsprünge aufweisen zu lassen, die wahlweise in Löcher von in größerer Anzahl an der Oberseite des Gerätefußes vorhandener Lochgruppen einsetzbar sind.

Nach einem anderen Vorschlag der Erfindung ist dem Gehäuse des Elektromotors eine an sich bekannte mit einem Betätiger versehene Verstellvorrichtung zugeordnet. Mittels einer solchen Verstellvorrichtung ist es ohne Schwierigkeiten möglich, die Lage des Gehäuses des Elektromotors auf dem Gerätefuß zu verändern, und damit eine Anpassung an den Durchmesser des zu benutzenden Arbeitsbehälters zu erzielen.

Nach einem anderen Vorschlag der Erfindung ist dem verschiebbaren und feststellbaren Gehäuse des Elektromotors eine Führung zugeordnet. Diese Führung gewährleistet den problemlosen Übergang des Gehäuses von seiner einen in die andere Endlage. Diese Führung kann zweckmäßig einen horizontalen mit der Oberfläche des Gehäuses zusammenwirkenden Bereich aufweisen, der in einen senkrechten, zugleich als Anschlag dienenden Bereich übergeht.

Auf der Zeichnung ist die Erfindung in mehreren Ausführungsbeispielen dargestellt, und zwar zeigen:

Fig. 1     ein erfindungsgemäß ausgebildetes, elektrisch betriebenes Gerät für die Bearbeitung und Zubereitung von Nahrungsmitteln in Vorderansicht, teilweise geschnitten, wobei das Gehäuse des Elektromotors im Bezug auf den Arbeitsbehälter eine erste Endlage einnimmt,

Fig. 2     in Seitenansicht das elektrisch betriebene Gerät für die Bearbeitung und Zubereitung von Nahrungsmitteln gemäß Fig. 1, jedoch bei einem ausgewechselten Arbeitsbehälter mit größerem Durchmesser, wobei das Gehäuse des Elektromotors sich in seiner zweiten Endlage in Bezug auf den Gerätefuß befindet,

Fig. 3     einen Teilschnitt durch das Gehäuse des elektrisch betriebenen Gerätes für die Bearbeitung und Zubereitung von Nahrungsmitteln gemäß Fig. 1 der Zeichnung, teilweise weggebrochen und im vergrößertem Maßstab,

Fig. 4     eine Draufsicht auf das Gehäuse gemäß der Fig. 3 der Zeichnung, teilweise geschnitten und teilweise weggebrochen, dargestellt in der Schaltbereitschaftslage des Schalters,

Fig. 5     eine zweite Ausführungsform des erfindungsgemäß ausgebildeten elektrisch betriebenen Gerätes für die Bearbeitung und Zubereitung von Nahrungsmitteln in Vorderansicht, teilweise weggeschnitten, wobei das Gehäuse des Elektromotors seine eine Endlage aufweist und die Sicherheitseinrichtung in ihrer Funktionslage wiedergegeben ist, und

Fig. 6     das elektrisch betriebene Gerät für die Bearbeitung und Zubereitung von Nahrungsmitteln nach der Fig. 5 der Zeichnung, jedoch nach dem Austausch des Arbeitsbehälters und nach dem Überführen des Gehäuses für den Elektromotor in seine zweite Endlage gegenüber dem Gerätefuß.

Es sei zunächst vorausgeschickt, daß in den Figuren der Zeichnungen nur diejenigen Teile eines elektrisch betriebenen Gerätes für die Bearbeitung und Zubereitung von Nahrungsmitteln dargestellt sind, die für das Verständnis der Erfindung Bedeutung haben. Es fehlen insbesondere die elektrischen Zuleitungen und die Verdrahtungen sowie die mit ihnen zusammenwirkenden Schalt- und Steuereinrichtungen. Alle fehlenden Teile können einen an sich bekannten Aufbau haben.

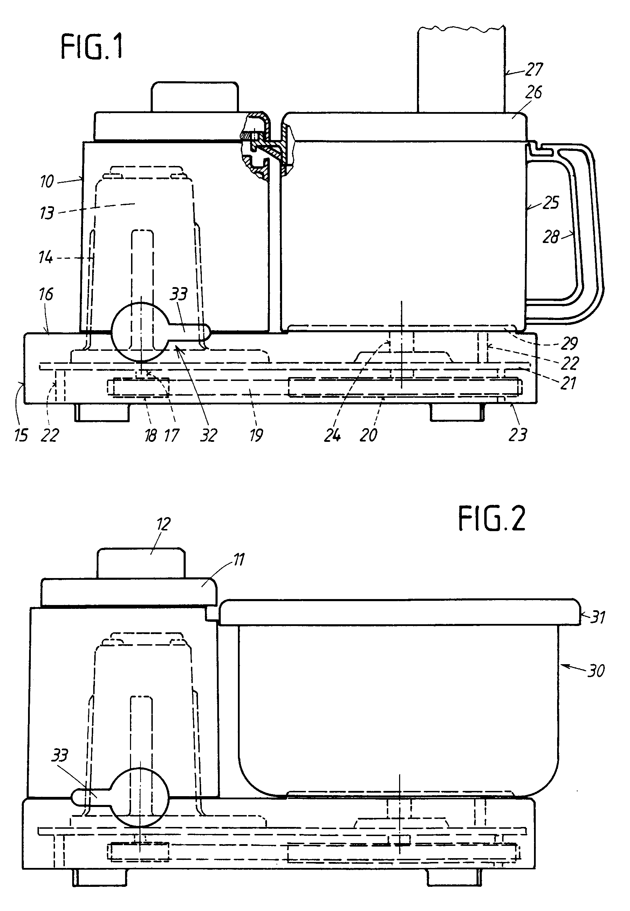

Das dem Ausführungsbeispiel nach der Fig. 1 der Zeichnung zugrundegelegte elektrisch betriebene Gerät für die Bearbeitung und Zubereitung von Nahrungsmitteln hat ein Gehäuse 10 mit einer Abdeckung 11 und einem an der Außenseite der Abdeckung befindlichen Drehknopf 12. Innerhalb des Gehäuses 10 ist ein an sich bekannter Elektromotor 13 untergebracht, dieser ist noch von einer gehäuseartigen Motorabdeckung 14 umgeben. Dies geschieht, um die Geräusche des im Betrieb befindlichen Elektromotors zu dämpfen.

Wie aus der Fig. 1 der Zeichnung ersichtlich, ist eine Trennung zwischen dem Gehäuse 10 und einem generell mit 15 bezeichneten Gerätefuß vorgenommen derart, daß das Gehäuse 10 gegenüber dem Gerätefuß 15 unterschiedliche Lagen einnehmen kann. Dabei ist die eine Endlage des Gehäuses 10 im Bezug auf den Gerätefuß 15 in der Fig. 1 der Zeichnung und die zweite Endlage in der Fig. 2 der Zeichnung wiedergegeben. Dies bedeutet, daß das Gehäuse 10 auf der Oberseite 16 des Gerätefußes 15 unterschiedliche Lagen einnehmen kann.

Wie gesagt, ist in dem Gehäuse 10 ein an sich bekannter Elektromotor 13 untergebracht. Dieser Elektromotor 13 und seine Motorabdeckung 14 werden von einer Trägerplatte 21 aufgenommen, die innerhalb des Gerätefußes 15 in Längsrichtung verlaufend angeordnet ist. Diese Trägerplatte 21 wirkt mit Abstützungen 22 zusammen, die den Wandungen des Gehäusefußes 15 innenliegend angeformt sind, und die für eine Lagesicherung der Trägerplatte 21 sorgen. Dabei können diese Abstützungen 22 von unterschiedlichen Seiten her auf die Trägerplatte 21 einwirken.

Der Elektromotor 13 hat eine Motorwelle 17, deren freies Ende in den Hohlraum des Gehäusefußes 15 hineinragt und dort ein Rad 18 trägt, welches mit einem Riemen - vorzugsweise mit einem Zahnriemen 19 - zusammenwirkt. Dieser Zahnriemen 19 wird über ein im Durchmesser wesentlich größeres Antriebsrad 20 herumgeführt. Dieses Antriebsrad 20 ist im Ausführungsbeispiel zugleich als Lüfterrad ausgebildet und hat daher an seiner Umfangsfläche liegend eine Vielzahl von Zähnen, die mit den nicht näher bezeichneten Gegenzähnen des Zahnriemens 19 in grundsätzlich bekannter Weise zusammenwirken.

Das als Lüfterrad ausgebildete Antriebsrad 20 ist auf dem in den Hohlraum des Gehäusefußes 15 hineinragenden Ende einer Arbeits- oder Werkzeugswelle 24 angeordnet. Das Lüfterrad kann auf dem Ende der Welle - zum Beispiel mittels einer Mutter - gehalten werden, es können aber auch andere Befestigungsarten zum Halten des Lüfterrades 20 auf der Werkzeug- oder Arbeitswelle 24 benutzt werden.

Dem Lüfterrad 20 kann eine Vielzahl von Schaufeln zugeordnet werden.

Der Gehäusefuß 15 ist im wesentlichen zweiteilig gestaltet, er besteht aus einem nicht näher bezeichneten Hohlkörper, der nach oben hin durch die Oberseite 16 verschlossen ist, dagegen nach unten hin an sich geöffnet ist. Im Bereich dieser Öffnung ist der Boden 23 vorgesehen. Beide Teile können mit bekannten Mitteln miteinander vereinigt werden, wobei es zweckmäßig ist, daß der Boden 23 noch auf seiner Außenseite Aufstellfüße besitzt.

Der Oberteil des Gerätefußes 15 hat im Bereich seiner Oberseite 16 einen glatten Durchbruch zum Durchgriff der Arbeits- bzw. Werkzeugwelle 24. In der Oberseite 16 des Gerätefußes 15 ist noch ein nicht näher bezeichneter Vorsprung vorhanden, der mit Bereichen des Bodens eines generell mit 25 bezeichneten Arbeitsbehälters derart zusammenwirkt, daß eine Querverschiebung des Arbeitsbehälters 25 auf der Oberseite 16 des Gehäusefußes 15 verhindert wird.

Dem Boden des Arbeitsbehälters 25 ist in bekannter Weise ein hülsenartiger Vorsprung angeformt, der in das Innere des Arbeitsbehälters 25 hineinragt. In diesen hülsenartigen Vorsprung greift das obere Ende der Arbeits- bzw. Werkzeugwelle 24 ein. Das obere, also in den Arbeitsbehälter 25 hineinragende Ende der Arbeits- oder Werkzeugwelle trägt eine nicht dargestellte Isolierhülse, die Kupplungsvorsprünge aufweist, welche mit Gegenkupplungen eines Adapters zusammenwirken kann. Auf diesen Adapter können in bekannter Weise unterschiedlich gestaltete Werkzeuge aufgebracht werden. Die Ausbildung des Adapters und dessen Wirkungsweise ist in der DE-PS 34 08 692 ausführlich beschrieben.

Der Arbeitsbehälter 25 ist nach oben hin durch einen abnehmbaren Deckel 26 verschlossen, der in bekannter Weise mit einem Einfüllstutzen 27 integriert ist. Durch diesen Einfüllstutzen können die zu zerkleinernden Nahrungsmittel od.dgl. in das Innere des Arbeitsbehälters 25 geführt werden. Zur Erleichterung des Abnehmens des Arbeitsbehälters 25 hat dieser einen angeformten Handgriff 28.

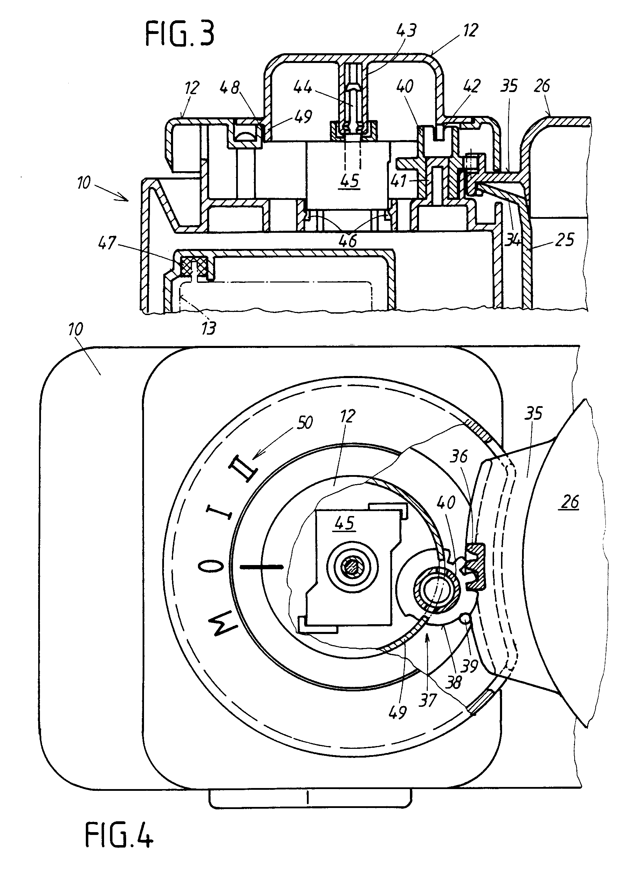

Bei der Ausführungsform des elektrisch betriebenen Gerätes nach der Fig. 1 der Zeichnung hat dieses eine Sicherheitseinrichtung die bewirkt, daß das Einschalten des Elektromotors nur dann erfolgen kann, wenn der Deckel 26 sich in der in Fig. 1 dargestellten Lage auf dem Arbeitsbehälter 25 befindet. Ein Ausführungsbeispiel einer solchen Sicherheitseinrichtung ist in den Fig. 3 und 4 der Zeichnung wiedergegeben.

Im gewählten Ausführungsbeispiel ist der Deckel 26 des Arbeitsbehälters 25 mit einer Verlängerung 35 versehen, deren vorderer freier Bereich als Verzahnung 36 ausgebildet ist. Diese Verzahnung 36 wirkt mit einem Schaltrad bzw. Ritzel 37 zusammen, welches auf dem Gehäuse 10 drehbar gelagert ist. Dem Schaltrad bzw. dem Ritzel 37 ist ein Anschlag 39 zugeordnet, der in der Stellung des Schaltrades gemäß der Fig. 4 der Zeichnung an dem einen Ende einer Ausnehmung 38 anliegt. Bestandteil des Schaltrades ist auch ein rohrförmiger Ansatz 40, der im Bezug auf eine mittlere scheibenförmige, nicht näher bezeichnete Nabe des Schaltrades 37 nach beiden Seiten hin vorsteht. In die untere Bohrung des rohrförmigen Ansatzes 40 greift ein Vorsprung 41 des Gehäuses 10. Auf diesem Vorsprung 41 ist das Schaltrad 37 drehbar gelagert.

Zu dem Gehäuse 10 gehört auch die Abdeckung 12, die den oberen Abschluß des Gehäuses bildet und in ihrer Mitte liegend einen Durchbruch 48 aufweist, in den vorstehende Randbereiche 49 des Drehknopfes 12 eingreifen. An der Innenwand seiner Decke liegend hat der Drehknopf 12 einen Hohlzapfen 43, der zur Unterbringung eines Lager- bzw. Betätigungsstiftes 44 dient, der seinerseits einem Schalter 45 zugeordnet ist. Dieser Schalter 45 kann einen an sich bekannten Aufbau haben, so daß in den Fig. 3 und 4 der Zeichnungen nur das Gehäuse dieses Schalters 45 veranschaulicht ist. Der Schalter 45 kann im übrigen über Rastverbindungen 46 mit Teilen des Gehäuses 10 lösbar verbunden werden.

Der obere Teil des rohrförmigen Ansatzes 40 des Schaltrades 37 hat zwei Schlitze 42, die so angeordnet sind, daß der Randbereich 49 beim Betätigen des Drehknopfes 12 in sie eintreten und damit eine Drehung des Schaltrades 37 verhindern kann. Die Begrenzungswandungen der Schlitze 42 sind gekrümmt, wobei der Krümmungsmittelpunkt mit dem Mittelpunkt des Drehknopfes 12 zusammenfällt. Nachzutragen bleibt noch, daß die Verlängerung 35 des Deckels 46 durch einen Aufnahmeschlitz des Gehäuses 10 hindurchgreift derart, daß die Verzahnung 36 innerhalb des Gehäuses 10 zu liegen kommt.

In der in Fig. 1 wiedergegebenen Lage von Gehäuse 10 und Arbeitsbehälter 25 befindet sich die Sicherheitseinrichtung in ihrer wirksamen Lage, das heißt, der Deckel 26 ist nicht nur auf den Arbeitsbehälter 25 aufgesetzt, sondern auch so verdreht, daß seine Verlängerung 35 in den nicht näher bezeichneten Aufnahmeschlitz des Gehäuses 10 eintaucht. Bei dieser Bewegung untergreift ein im Querschnitt L-förmig gestalteter Bereich des Vorsprunges 35 die Schnaupe 34 des Arbeitsbehälters 25 - vergleiche dazu die Fig. 3 der Zeichnung -. Im übrigen ist die Wirkungsweise eines solchen Sicherheitsschalters in der DE-PS 34 48 174 näher beschrieben.

Damit der Benutzer des Gerätes sehen kann, welche Schaltstellung eingeschaltet ist, sind - vergleiche dazu die Fig. 4 der Zeichnungen - Markierungen 50 vorgesehen. Es sei noch erwähnt, daß in der Verriegelungsstellung gemäß der Fig. 3 der Zeichnung der Deckel 26 nicht vom Arbeitsbehälter 25 abgenommen werden kann.

Im gewählten Ausführungsbeispiel ist dem Elektromotor 13 des Gerätes eine Motorabdeckung 14 zugeordnet. Diese hat einmal die Aufgabe, die Geräuschbildung bei Betrieb des Gerätes herabzusetzen,und zum anderen kann sie auch im Zusammenwirken mit Außenwandungen des Elektromotors zur Führung der Kühlluft herangezogen werden, die vom Lüfterrad erzeugt wird.

Wie aus der Fig. 1 der Zeichnung ersichtlich, ist die Lage des Elektromotors 13 innerhalb des Gehäuses 10 so gewählt, daß auf der dem Arbeitsbehälter 25 zugekehrten Seite des Gehäuses 25 noch ein großer Freiraum verbleibt. Diese Anordnung ist deshalb gewählt, um die Lage des Gehäuses 10 auf dem Gerätefuß 15 verändern zu können. Dadurch wird Platz geschaffen, um auf dem Gerätefuß 15 auch im Durchmesser größere Arbeitsbehälter unterbringen zu können. Zu diesem Zweck ist das Gehäuse 10 vom Gerätefuß 15 getrennt und kann in unterschiedlicher Art und Weise mit dem Gerätefuß 15 verbunden bzw. auf diesem angeordnet werden. Ein solches Ausführungsbeispiel ist in der Fig. 2 der Zeichnung wiedergegeben. Dort ist erkennbar, daß das Gehäuse 10 nunmehr derart auf dem Gerätefuß 15 angeordnet ist, daß es mit seiner einen Seitenwand etwa mit derjenigen des Gerätefußes 15 fluchtet. In diese Lage ist das Gehäuse 10 dadurch gelangt, daß man mittels des Betätigers 33 die grundsätzlich bekannte Verstelleinrichtung 32 betätigt. Während der Betätiger 33 der Verstelleinrichtung 32 in der Fig. 1 nach rechts zeigt, ist er in der Fig. 2 um 180° gedreht, zeigt also auf der Fig. 2 nach links. Mit diesem Bewegen des Betätigers 33 wird auch das Gehäuse 10 mitbewegt. Dies hat zur Folge, daß der Elektromotor 13 nun innerhalb des Gehäuses eine andere Lage einnimmt. Wichtig ist, daß der gegenseitige Abstand zwischen der Motorwelle 17 einerseits und der Arbeitswelle 24 bestehen bleibt. Damit können alle innerhalb des Gerätefußes 15 befindlichen Teile und auch die Antriebsmittel beibehalten bleiben, es ändert sich nur die Lage des Gehäuses 10 auf dem Gerätefuß 15. Dadurch wird die Möglichkeit geschaffen, auf der Oberfläche 16 des Gerätefußes nunmehr einen anderen Arbeitsbehälter anzuordnen. In dem gewählten Ausführungsbeispiel nach der Fig. 2 ist dies eine Rührschüssel 30, die einen oberen zurückgebogenen umlaufenden Rand 31 aufweist. Innerhalb einer solchen Rührschüssel 30 kann zum Beispiel eine bekannte Knetvorrichtung so angeordnet werden, daß sie mit der ebenfalls in den Arbeitsbehälter hineinragenden Arbeits- bzw. Werkzeugwelle dem als Kneter od.dgl. ausgebildeten Arbeitswerkzeug ein Reduziergetriebe zugeordnet, durch welches die Drehgeschwindigkeit des Kneters erheblich herabgesetzt wird, dies deshalb, weil bei der Rührschüssel 30 auf die Anwendung eines Deckels und damit einer Sicherheitseinrichtung verzichtet wird. Die Verstelleinrichtung 32 kann einen grundsätzlich bekannten Aufbau aufweisen. Es können alle in der einschlägigen Technik gebräuchlichen Ausführungen hierfür eingesetzt werden, beispielsweise auch eine exzentrische Verstellvorrichtung.

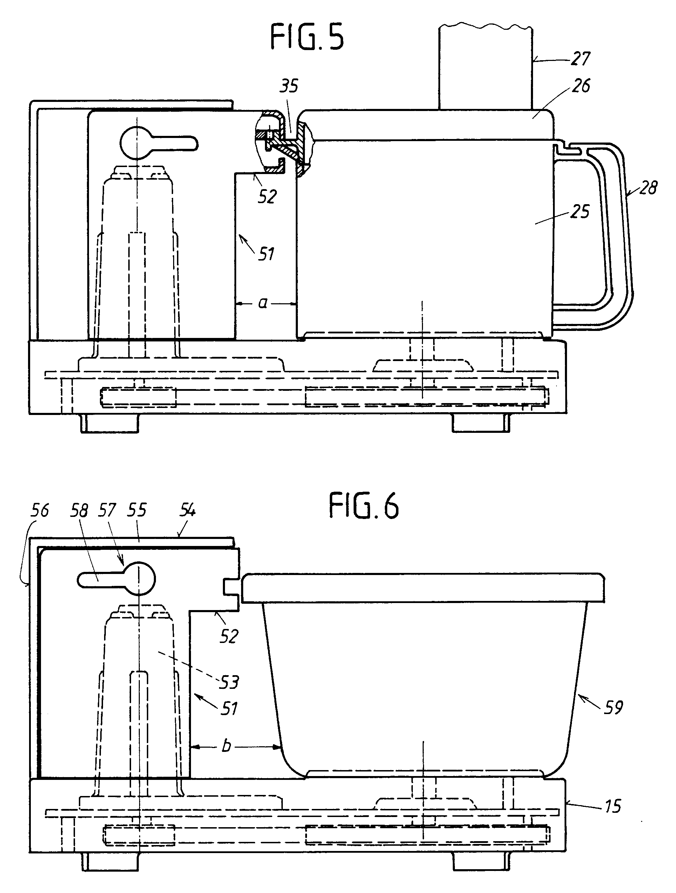

In der Fig. 5 der Zeichnungen ist eine abgewandelte Ausführungsform eines elektrisch betriebenen Gerätes für die Bearbeitung und Zubereitung von Nahrungsmitteln wiedergegeben. Was die Ausbildung des Gerätefußes 15 und der in ihm untergebrachten Antriebseinrichtungen angeht, so ist keine Veränderung vorgenommen, dies gilt auch für die Ausbildung des Arbeitsbehälters 25 und der Sicherheitseinrichtung. Anders ausgebildet ist jedoch das Gehäuse, welches in der Ausführungsform gemäß der Fig. 5 der Zeichnungen nunmehr mit 51 bezeichnet ist. Es besteht aus einem hohlzylinderförmigen unteren Teil und einem Ausleger 52, der etwa in Höhe der Schnaupe 34 des Arbeitsbehälters 25 angeordnet ist, dies deshalb, weil der Vorsprung 35 des Deckels 26 wiederum in einen nicht näher bezeichneten Schlitz des Auslegers 52 eingreifen soll.

Der Elektromotor 13 ist bei der Ausführungsform des Gerätes nach der Fig. 5 in seinen Breitenabmessungen kleinergehalten, weil man bei dieser Ausführungsform mit einem im Durchmesser kleineren Gehäuse 51 auskommen muß. Abweichend von der Ausführungsform nach der Fig. 1 der Zeichnung ist auch, daß man dem Gehäuse 51 nunmehr eine Führung zugeordnet hat, die generell mit 54 bezeichnet ist, und welche sich aus einem horizontalen Bereich 55 und einem vertikalen Bereich 56 zusammensetzt. Der vertikale Bereich liegt dabei in der Verlängerung der einen Stirnseite des Gerätefußes 15. Geändert worden ist auch die Lage der nunmehr mit 57 bezeichneten Verstellvorrichtung, die einen Betätiger 58 aufweist. Auch in diesem Falle kann der Betätiger 58 aus der in Fig. 5 dargestellten horizontalen Lage, in welche er in Richtung auf den Arbeitsbehälter 25 zeigt, verdreht werden in die in der Fig. 6 wiedergegebene andere Endlage, in der er in Richtung auf den vertikalen Bereich 56 der Führung 54 zeigt Der vertikale Bereich 56 dient zugleich als Anschlag, er kommt somit mit der ihm zugekehrten Seite des Gehäuses 51 in Wirkverbindung.

Beim Überführen des Gehäuses 51 aus der in Fig. 5 dargestellten Lage in die nach der Fig. 6 vergrößert sich der Abstand a zwischen der Umfangsfläche des Arbeitsbehälters 25 und der Umfangsfläche des Gehäuses 51 von dem kleinsten Wert a auf den größeren Wert b, wobei im letztgenannten Falle der Arbeitsbehälter 25 wieder durch eine nunmehr mit 59 bezeichnete Rührschüssel ersetzt ist. Die Rührschüssel 59 ist im Bezug auf die Rührschüssel 30 in ihrem Durchmesser etwas kleiner gehalten, jedoch in der Höhe größer, wie dies durch einen Vergleich der Fig. 2 und 6 ersichtlich ist.

Zur Erleichterung des Überführens des Gehäuses 10 bzw. 51 aus der einen Endlage in die andere können in der Oberseite 16 des Gerätefußes an sich bekannte Zwangsführungen vorgesehen sein.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt zum Beispiel für die Verstelleinrichtung des Gehäuses 10 bzw. 51. So kann man in Abwandlung der dargestellten Ausführungsbeispiele das Gehäuse 10 bzw. 51 des Elektromotors 13 bzw. 53 vom Gerätefuß 15 abnehmbar halten und mit diesem in unterschiedlichen Lagen lösbar verbinden. Dabei kann man beispielsweise das Gehäuse 10 bzw. 51 des Elektromotors 13 bzw. 53 an seiner dem Gerätefuß 15 zugekehrten Stirnfläche zapfenartige Vorsprünge aufweisen lassen, die wahlweise in Löcher von in größerer Anzahl an der Oberseite des Gerätefußes vorhandener Lochgruppen einsetzbar sind. Diese Lösung kann beispielsweise dann benutzt werden, wenn man sich mit einer stufenweisen Veränderung der Lage zwischen dem Gehäuse des Elektromotors und dem Arbeitsbehälter begnügt. Wird dagegeben eine stufenlose Einstellung gewünscht, so kann man auf die zeichnerisch wiedergegebenen Verstelleinrichtungen zurückgreifen. Selbstverständlich können anstelle der Rührschüssel 30 bwz. 59 auch andere an sich bekannte Arbeitsbehälter auf dem Gerätefuß angeordnet werden. Diese müssen nur so beschaffen sein, daß die Arbeits- bzw. Werkzeugwelle 24 mit den innerhalb des Arbeitsraumes des Arbeitsbehälters liegenden Werkzeugen in Wirkverbindung treten kann. Auch kann das Gehäuse eine andere als die dargestellte Ausführungsform erhalten.

**Bezugszeichenliste:**

| 10 | Gehäuse (I. Ausführung) |
|---|---|
| 11 | Abdeckung |
| 12 | Drehknopf |
| 13 | Elektromotor (I. Ausführung) |
| 14 | Motorabdeckung (Zweitgehäuse) |
| 15 | Gerätefuß |
| 16 | Oberseite (von 15) |
| 17 | Motorwelle |
| 18 | Rad (auf 17) |
| 19 | Zahnriemen |
| 20 | Antriebsrad (= Lüfterrad) |
| 21 | Trägerplatte |
| 22 | Abstützungen |
| 23 | Boden (von 15) |
| 24 | Arbeitswerkzeugwelle |
| 25 | Arbeitsbehälter (I. Ausführung) |
| 26 | Deckel (von 25) |
| 27 | Einfüllstutzen (an 26) |
| 28 | Handgriff (von 25) |
| 29 | erhabener Bereich (von 16) |
| 30 | Arbeitsbehälter (II. Ausführung) = Rührschüssel |
| 31 | Rand (von 30) |
| 32 | Verstelleinrichtung (für 10) |
| 33 | Betätiger (für 32) |
| 34 | Schnaupe (von 25) |

35 Verlängerung (an 26)
36 Verzahnung
37 Schaltrad
38 Ausnehmung
39 Anschlag
40 rohrförmiger Ansatz
41 Vorsprung (an 10)
42 Schlitz
43 Hohlzapfen
44 Lagerstift
45 Schalter
46 Rastverbindung
47 Dichtung
48 Durchbruch
49 Randbereich (von 12)
50 Markierung
51 Gehäuse (II. Ausführung)
52 Ausleger (von 51)
53 Elektromotor
54 Führung
55 horizontaler Bereich (von 54)
56 vertikaler Bereich (von 54)
57 Verstelleinrichtung (für 51)
58 Betätiger (von 57)
59 Arbeitsbehälter (II. Ausführung)
a = kleinster Abstand (Fig. 5)
b = größter Abstand (Fig. 6)

## Patentansprüche

1. Elektrisch betriebenes Gerät für die Bearbeitung und Zubereitung von Nahrungsmitteln aller Art mit einem Gehäuse (10,51) zur Unterbringung des Elektromotors (13,53) und von zugehörigen Schalt- und Steuereinrichtungen, das auf einem Gerätefuß (15) angeordnet ist, auf dem in Nebeneinanderanordnung ein Arbeitsbehälter (25,30,59) aufstellbar ist und mit einer Arbeitswelle (24), deren oberes Ende in einen beidseitig offenen hülsenartigen Vorsprung am Boden des Arbeitsbehälters (25,30,59) hineinragt und mit dem eine Isolierhülse fest verbunden ist, die der lösbaren Aufnahme eines Arbeitswerkzeuges dient, mit einem den Arbeitsbehälter (25,30,59) verschließbaren Deckel (26), dem eine Sicherheitseinrichtung zugeordnet ist,

   **dadurch gekennzeichnet,**

   daß dem elektrisch betriebenen Gerät mehrere unterschiedliche Durchmesser aufweisende Arbeitsbehälter (25,30,59) zugeordnet sind, und daß in Abhängigkeit von dem Durchmesser des benutzten Arbeitsbehälters (25,30,59) die Lage des Gehäuses (10,51) des Elektromotors (13,53) auf dem Gerätefuß (15) zu diesem Arbeitsbehälter (25,30,59) veränderbar ist.

2. Elektrisch betriebenes Gerät nach Anspruch 1, dadurch gekennzeichnet, daß das Gehäuse (10,51) des Elektromotors (13,53) vom Gerätefuß (15) abnehmbar und mit diesen in unterschiedlichen Lagen lösbar verbindbar ist.

3. Elektrisch betriebenes Gerät nach Anspruch 1 und 2, dadurch gekennzeichnet, daß das Gehäuse (10,51) des Elektromotors (13,53) an seiner dem Gerätefuß (15) zugekehrten Stirnfläche zapfenartige Vorsprünge aufweist, die wahlweise in Löcher von in größerer Anzahl an der Oberseite (10) des Gerätefußes vorhandener Lochgruppen einsetzbar sind.

4. Elektrisch betriebenes Gerät nach Anspruch 1, dadurch gekennzeichnet, daß dem Gehäuse (10,51) des Elektromotors (13,53) eine an sich bekannte,mit einem Betätiger (33 bzw. 58) versehene Verstellvorrichtung (32 bzw. 57) zugeordnet ist.

5. Elektrisch betriebenes Gerät nach Anspruch 1 und 4, dadurch gekennzeichnet, daß dem verschiebbaren und feststellbaren Gehäuse (10, 51) des Elektromotors (13,53) eine Führung (54) zugeordnet ist.

6. Elektrisch betriebenes Gerät nach Anspruch 5, dadurch gekennzeichnet, daß die Führung (54) einen horizontalen, mit der Oberfläche des Gehäuses (51) zusammenwirkenden Bereich (55) aufweist, der in einen senkrechten, als Anschlag dienenden Bereich (56) übergeht.

## Claims

1. Electrically powered device for processing and preparing foodstuffs of every kind, with a housing (10, 51) accommodating the electric motor (13, 53) and associated circuitry and control elements, which is mounted on a base (15) on which a mixing vessel (25, 30, 59) can be placed alongside, and with a working shaft (24), the upper end of which protrudes into a sleeve-like protrusion which is open at both ends in the bottom of the mixing vessel (25, 30, 59) and which is firmly connected to an insulating sleeve in which an implement can temporarily be fitted, as well as with a lid (26) covering the mixing vessel (25, 30, 59) and acting as a safety device,

   characterized by the fact that

   the electrically powered device has several mixing vessels (25, 30, 59) of different diameters and that the position of the housing (10, 51) of the electric motor (13, 53) on the base (15) can be varied in relation to the mixing vessel (25, 30, 59) as required by the diameter of the mixing vessel (25, 30, 59) being used.

2. Electrically powered device in accordance with Claim 1, characterized by the fact that the housing (10, 51) of the electric motor (13, 53) can be removed from the base (15) and can be temporarily connected to it in various positions.

3. Electrically powered device in accordance with Claims 1 and 2, characterized by the fact that the housing (10, 51) of the electric motor (13, 53) includes journal-like protrusions at the end facing the base (15), which are inserted in the holes of a large number of groups of holes on the top (10) of the base.

4. Electrically powered device in accordance with Claim 1, characterized by the fact that the housing (10, 51) of the electric motor (13, 53) includes a basically familiar adjusting device (32, 57) with actuator (33, 58).

5. Electrically powered device in accordance with Claims 1 and 4, characterized by the fact that a guide (54) is provided for the housing (10, 51) of the electric motor (13, 53) which can be both displaced and locked in position.

6. Electrically powered device in accordance with Claim 5, characterized by the fact that the guide (54) includes a horizontal area (55) interacting with the top of the housing (51) and ending in a vertical area (56) which serves as a mechanical stop.

**Revendications**

1. Appareil électrique pour traiter et préparer des produits alimentaires de toutes sortes, comportant un boîtier (10, 51) pour loger le moteur électrique (13, 53) et des dispositifs de commutation et de commande afférents, appareil disposé sur un pied d'appareil (15), sur lequel un récipient de travail (25, 30, 59) est susceptible d'être juxtaposé, et avec un arbre de travail (24), dont l'extrémité supérieure pénètre dans une saillie en forme de douille, ouverte des deux côtés, sur le fond du récipient de travail (25, 30, 59), et à cette extrémité supérieure est reliée rigidement une douille d'isolation servant à recevoir de façon amovible un outil de travail, avec un couvercle (26) susceptible de fermer le récipient de travail (25, 30, 59), auquel est associé un dispositif de sécurité, caractérisé en ce qu'à l'appareil électrique, sont associés plusieurs récipients de travail (25, 30, 59) présentant des diamètres différents, et en ce que la position du boîtier (10, 51) du moteur électrique (13, 53) sur le pied d'appareil, (15) par rapport à ce récipient de travail (25, 30, 59), est modifiable en fonction du diamètre du récipient de travail (25, 30, 59) utilisé.

2. Appareil électrique selon la revendication 1, caractérisé en ce que le boîtier (10, 51) du moteur électrique (13, 53) peut être détaché du pied d'appareil (15) et être relié à celui-ci, dans différentes positions, en étant amovible.

3. Appareil électrique selon les revendications 1 et 2, caractérisé en ce que le boîtier (10, 51) du moteur électrique (13, 53) présente sur sa face frontale tournée vers le pied d'appareil (15) des saillies en forme de tourillon, susceptibles d'être insérées à volonté dans des trous appartenant à des groupes de trous existant en plus grand nombre, sur la face supérieure (10) du pied d'appareil.

4. Appareil électrique selon la revendication 1, caractérisé en ce qu'un dispositif de réglage (32 ou 57), connu en soi, pourvu d'un organe d'actionnement (33 ou 58), est associé au boîtier (10, 51) du moteur électrique (13, 53).

5. Appareil électrique selon les revendications 1 et 4, caractérisé en ce qu'un guidage (54) est associé au boîtier (10, 51) déplaçable et blocable du moteur électrique (13, 53).

6. Appareil électrique selon la revendication 5, caractérisé en ce que le guidage (54) présente une zone horizontale (55), coopérant avec la surface du boîtier (51), qui se transforme en une zone verticale (56), servant de butée.

## FIG.1

## FIG.2

EP 0 375 866 B1

FIG.3

FIG.4

10

# FIG.5

# FIG.6